# EUROPÄISCHE PATENTSCHRIFT

(11) **EP 2 923 392 B1**
(45) Veröffentlichungstag und Bekanntmachung des Hinweises auf die Patenterteilung: **22.08.2018**
(21) Anmeldenummer: 13796045.6
(22) Anmeldetag: 25.11.2013
(51) Int. Cl.: H01M 2/06, H01M 2/30, H01R 4/50, H01M 2/28

(54) **ANSCHLUSSPOL FÜR EINEN AKKUMULATOR UND AKKUMULATOR**
CONNECTION POLE FOR AN ACCUMULATOR AND ACCUMULATOR
BORNE DE CONNEXION D'UN ACCUMULATEUR ET ACCUMULATEUR

(30) Priorität: 26.11.2012 DE 102012111409
(43) Veröffentlichungstag der Anmeldung: 30.09.2015
(73) Patentinhaber: Johnson Controls Autobatterie GmbH & Co. KGaA, 30419 Hannover (DE)
(72) Erfinder: STREUER, Peter, 30559 Hannover (DE); LEDOUX, Anne-Laure, 30855 Langenhagen (DE)
(74) Vertreter: Trinks, Ole
(86) Internationale Anmeldenummer: PCT/EP2013/074619
(87) Internationale Veröffentlichungsnummer: WO 2014/080012

(56) Entgegenhaltungen:
- EP-A1- 2 416 408
- EP-B1- 1 453 124
- US-A- 2 678 960
- US-A- 6 030 723
- US-A1- 2010 291 435
- US-A1- 2011 250 493

## Beschreibung

Die Erfindung betrifft einen Anschlusspol für einen Akkumulator gemäß dem Anspruch 1. Die Erfindung betrifft außerdem einen Polschaft eines Akkumulators gemäß Anspruch 8 und einen Akkumulator gemäß Anspruch 11.

Allgemein betrifft die Erfindung das Gebiet elektrochemischer Akkumulatoren, die wiederaufladbar sind, insbesondere Akkumulatoren für Fahrzeuge. Anschlusspole für Akkumulatoren dienen zur elektrischen Kontaktierung des Akkumulators mit elektrischen Einrichtungen, die von dem Akkumulator mit Strom versorgt werden sollen. Wenn der Akkumulator z.B. als Starterbatterie für ein Kraftfahrzeug ausgebildet ist, werden an zwei Anschlusspole der Starterbatterie die entsprechenden Polklemmen angeschlossen.

Ein solcher Anschlusspol weist einen inneren hohlen Bereich auf, der zur Einführung oder Durchführung eines Polschafts des Akkumulators eingerichtet ist. Der Polschaft kann z.B. im Inneren des Akkumulators mit Elektrodenplatten eines Plattensatzes verbunden sein. Bei der Herstellung eines Akkumulators werden in ein Gehäuseteil zunächst die Plattensätze mit den damit verbundenen Polschäften eingesetzt. Sodann wird ein mit Anschlusspolen versehenes Deckelteil auf das Gehäuseteil des Akkumulators aufgesetzt. Hierbei werden die Polschäfte jeweils in den inneren hohlen Bereich des Anschlusspols eingeführt bzw. durchgeführt. Hierbei kann es zu erhöhter Reibung und zu Hemmungen beim Einführen der Polschäfte in den inneren hohlen Bereich des Anschlusspols kommen, insbesondere wenn die Polschäfte leicht schräg stehen oder nicht genau auf die Anschlusspole ausgerichtet sind. Hierdurch wird die Fertigung des Akkumulators erschwert.

Gattungsgemäße Anschlusspole sind z.B. aus der DE 10 2010 022 584 A1 bekannt. Aus der EP 1 453 124 B1 ist bekannt, zur Verringerung der Reibung zwischen Anschlusspol und Polschaft ein den Polschaft in Umfangsrichtung vollständig umgebendes Gleitelement vorzusehen. Aus der DE 10 2010 033 645 A1 geht der Vorschlag hervor, bei einem konventionell gefertigten Anschlusspol an dessen Innenseite eine Mehrzahl von streifenförmigen, über den Innenumfang des Anschlusspols voneinander beabstandeten Gleitelementen anzuordnen, die aus dem Kunststoffmaterial des Deckelteils gefertigt sein.

Darüber hinaus offenbaren die Druckschriften US 2011/0250493 A1 und US 2 678 960 A Anschlusspole mit mehreren an der Innenwand verlaufenden Strukturen welche entweder als Kanäle oder Rippen ausgeführt sind.

Der vorliegenden Erfindung liegt die Aufgabe zugrunde, einen Anschlusspol für einen Akkumulator anzugeben, mit dem eine verbesserte Fertigung des Akkumulators, insbesondere beim Aufsetzen des Deckelteils auf das Gehäuseteil, möglich ist, die eine kostengünstige und produktionstechnisch gut umsetzbare Alternative zu den vorgenannten Lösungen ist. Ferner soll ein Polschaft angegeben werden, der eine verbesserte Fertigung des Akkumulators, insbesondere beim Aufsetzen des Deckelteils auf das Gehäuseteil, erlaubt. Des Weiteren soll ein hinsichtlich der Fertigung verbesserter Akkumulator angegeben werden, der ein besseres Aufsetzen des Deckelteils auf das Gehäuseteil ermöglicht.

Diese Aufgabe wird gemäß Anspruch 1 gelöst durch einen Anschlusspol für einen Akkumulator, wobei der Anschlusspol einen inneren hohlen Bereich aufweist, der zur Einführung oder Durchführung eines Polschafts des Akkumulators eingerichtet ist, wobei der Anschlusspol im inneren hohlen Bereich mehrere in Längsrichtung des Anschlusspols verlaufende Rippen an der Innenwand aufweist, wobei eine, mehrere oder alle Rippen einstückig mit dem Anschlusspol aus dem Material des Anschlusspols ausgeführt sind.

Gemäß der Erfindung weist somit der Anschlusspol im inneren hohlen Bereich mehrere in Längsrichtung des Anschlusspols verlaufende Rippen an der Innenwand auf, die ganz oder teilweise einstückig mit dem Anschlusspol aus dem Material des Anschlusspols ausgeführt sind. Sofern der Anschlusspol aus Blei hergestellt ist, können die Rippen z.B. als Bleigleitrippen ausgebildet sein. Hiermit wird eine fertigungstechnisch einfach umzusetzende und kostengünstige Alternative zu den zuvor genannten Vorschlägen aus dem Stand der Technik angegeben. Der Anschlusspol kann gleich bei seiner Fertigung mit den Rippen hergestellt werden, so dass beim Umspritzen der Anschlusspole mit dem Material des Deckelteils diese bereits fertig mit den integrierten Rippen vorliegen und nicht später nachbearbeitet werden müssen. Ein in dieser Art gefertigtes Deckelteil kann dann leicht auf das untere Gehäuseteil des Akkumulators mit den daraus herausstehenden Polschäften aufgesetzt werden, ohne dass es zu Verkantungen oder Verklemmungen kommt. Vielmehr können die Polschäfte leicht an den Rippen entlang gleiten und werden durch diese zentriert in den inneren hohlen Bereich des Anschlusspols eingeführt bzw. gegebenenfalls auch vollständig durchgeführt.

Der Anschlusspol kann einen inneren hohlen Bereich aufweisen, der in Längsrichtung des Anschlusspols vollständig durchgehend ausgebildet ist oder nur teilweise durchgehend ausgebildet ist. Im Fall eines vollständig durchgehenden inneren hohlen Bereichs ist der Anschlusspol hülsenartig ausgebildet, z.B. in Form einer Anschlusshülse.

Die an der Innenwand des Anschlusspols gebildeten Rippen sind zumindest in Umfangsrichtung voneinander beabstandet, so dass Zwischenräume gebildet werden. Dies erlaubt ein einfaches reibungsarmes Hineingleiten des Polschafts in den inneren hohlen Bereich des Anschlusspols. Ein weiterer Vorteil ist, dass durch den Freiraum zwischen den Rippen noch ausreichend Platz für die in der Praxis insbesondere in heißen Ländern auftretenden Korrosionsprodukte ist. Diese sind für den weiteren Betrieb des Akkumulators nicht störend, da sie sich in den Freiräumen anlagern können.

Hinsichtlich seiner äußeren Formgebung kann der Anschlusspol z.B. gemäß DE 10 2010 022 584 A1 ausgebildet sein. Insbesondere kann der Anschlusspol in Längsrichtung gesehen einen Anschlussabschnitt aufweisen, der zur Befestigung einer Polklemme eingerichtet ist. Die Polklemme wird dann in dem Anschlussabschnitt an der Außenseite des Anschlusspols befestigt.

Ferner kann der Anschlusspol einen Befestigungsabschnitt aufweisen, der zur Befestigung des Anschlusspols in einem Gehäuseteil des Akkumulators eingerichtet ist, z.B. im Deckelteil. Über den Befestigungsabschnitt kann der Anschlusspol z.B. in das Material des Gehäuseteils des Akkumulators integriert werden, z.B. beim Kunststoff-Spritzgießprozess im Laufe der Herstellung des Gehäuseteils. Gemäß einer vorteilhaften Ausgestaltung weist der Befestigungsabschnitt ein Labyrinth auf, z.B. in Form von einem oder mehreren an der Außenwand des Anschlusspols angeordneten, von der Außenwand hervorstehenden und in Umfangsrichtung umlaufenden Vorsprüngen, die z.B. mit Hinterschnitten ausgebildet sein können.

Der Polschaft sowie der Anschlusspol sind üblicherweise aus Blei gefertigt. Durch die Rippen kann die bei der Berührung von zwei aus Blei hergestellten Teilen entstehende, ansonsten relativ hohe Reibung erheblich reduziert werden.

Gemäß der Erfindung wird statt eines einzigen, sich über den vollen Umfang des Polschafts erstreckenden Gleitelements eine Mehrzahl von z.B. streifenförmigen, über den Innenumfang der Anschlusspol voneinander beabstandeten Rippen vorgeschlagen. Dies erlaubt eine Verringerung der Auflagefläche zwischen den Rippen und dem Polschaft und damit eine weitere Verringerung der störenden Reibung. Zudem können die streifenförmigen, voneinander beabstandeten Rippen einfacher und billiger gefertigt werden. Durch die zwischen den Rippen vorgesehenen Abstände werden zudem Freiräume zwischen den Rippen geschaffen. Auch hierdurch kann der Fertigungsablauf bei der Herstellung eines Akkumulators verbessert werden. Die streifenförmige Ausbildung der Rippen hat den weiteren Vorteil, dass eine Ausrichtung eventuell schräg stehender Polschäfte weiter verbessert werden kann. Vorteilhaft erstrecken sich hiermit die Rippen in Einführrichtung des Polschafts.

Die Erfindung erlaubt es insgesamt, die störende Reibung beim Aufsetzen des Deckelteils auf das Gehäuseteil im Bereich der Polschäfte weitgehend zu minimieren und Hemmungen zu vermeiden. In Folge dessen kann ein eventuelles unerwünschtes Herunterdrücken von Polschäften beim Aufsetzen des Deckelteils vermieden werden.

Der Anschlusspol kann insbesondere durch Kaltverformung hergestellt sein. Auch eine Herstellung mit einem Gießprozess ist möglich. Es ist vorteilhaft, die Rippen dabei fehlstellenfrei und lunkerfrei zu erzeugen. Es ist auch vorteilhaft, die Rippen mit einer möglichst glatten Oberfläche herzustellen, um eine gute Gleitwirkung bzw. Gleitfläche bereitzustellen.

Vorteilhaft sind die Rippen über den Innenumfang des Anschlusspols so eng beieinander angeordnet und weisen eine derartige Dicke auf, dass das obere Ende des Polschafts nicht zwischen zwei Rippen mit der Innenwand des Anschlusspols in Berührung kommen kann. Dadurch wird bewirkt, dass der Polschaft an den Rippen entlang gleitend ausgerichtet wird und ohne Hemmung in den oberen Bereich der Anschlusspol eintauchen kann. Sodann kann der Anschlusspol mit dem Polschaft verschweißt werden.

Die nachfolgend erläuterten vorteilhaften Weiterbildungen der Erfindung können grundsätzlich für alle Rippen oder auch nur für eine Untermenge der Rippen realisiert werden, z.B. für eine, mehrere oder alle der Rippen. Der Einfachheit halber sei daher grundsätzlich von "Rippen" gesprochen.

Dies schließt die Möglichkeit ein, dass die genannte Weiterbildung nur für eine der Rippen realisiert wird, für mehrere der Rippen oder für alle Rippen.

Gemäß einer vorteilhaften Weiterbildung der Erfindung weist der Anschlusspol einen Befestigungsabschnitt auf, der zur Befestigung des Anschlusspols in einem Gehäuseteil des Akkumulators eingerichtet ist, und eine, mehrere oder alle Rippen sind an der Innenwand des Befestigungsabschnitts angeordnet. Dementsprechend weist der Befestigungsabschnitt zumindest einen Teil des inneren hohlen Bereichs des Anschlusspols auf.

Insbesondere können eine, mehrere oder alle Rippen am vom Anschlussabschnitt abgewandten, unteren Ende des Anschlusspols oder nahe diesem unteren Ende an der Innenwand des Befestigungsabschnitts angeordnet sein. Dies hat den Vorteil, dass die Rippen relativ frühzeitig in Kontakt mit dem Polschaft kommen und diesen gleich von Beginn der Einführung des Polschafts in den inneren hohlen Bereich führen können.

Gemäß einer vorteilhaften Weiterbildung der Erfindung weist der Befestigungsabschnitt einen Labyrinthabschnitt auf, in dem der Anschlusspol am Außenumfang wenigstens einen umlaufenden Vorsprung aufweist, wobei der Labyrinthabschnitt zur Labyrinthbildung mit dem Gehäusematerial eingerichtet ist, und eine, mehrere oder alle Rippen sind an der Innenwand des Labyrinthabschnitts angeordnet.

Gemäß einer vorteilhaften Weiterbildung der Erfindung erstrecken sich die Rippen in Längsrichtung des Anschlusspols im Wesentlichen über den Befestigungsabschnitt oder zumindest im Wesentlichen über den Labyrinthabschnitt. Hierdurch wird eine lange Führungsstrecke für den Polschaft realisiert, was ein einfaches und sicheres Einführen des Polschafts in den Anschlusspol gewährleistet.

Gemäß einer vorteilhaften Weiterbildung der Erfindung erstrecken sich die Rippen in Längsrichtung des Anschlusspols wenigstens bis zu einem zum Inneren des Akkumulators gerichteten Ende des Anschlusspols, d.h. bis zu dem vom für den Anschluss einer Polklemme vorgesehenen Anschlussabschnitt des Anschlusspols fort weisenden Ende. Dies gewährleistet eine sichere, reibungsarme Führung und Ausrichtung des Polschafts bereits zu Beginn des Aufsetzvorgangs des Deckelteils auf das Gehäuseteil des Akkumulators.

Gemäß einer vorteilhaften Weiterbildung der Erfindung ragen die Rippen von der Innenseite des Anschlusspols hervor, so dass ein Abstand zwischen der Innenseite des Anschlusspols und einem Polschaft im Bereich der Rippen gebildet wird. Die Rippen wirken hierbei vorteilhaft als Abstandshalter, so dass es nicht zu einem direkten Kontakt zwischen dem Polschaft und dem Anschlusspol und damit zu unerwünschter Reibung kommen kann. Der Polschaft liegt damit an keiner Stelle direkt an der Innenseite des Anschlusspols an, sondern wird über die Rippen allseitig davon ferngehalten und zentriert.

Die Rippen können von der gesamten Innenoberfläche des Anschlusspols hervorragen, d.h. sie können die am weitesten in den Innenbereich des Anschlusspols hineinragenden Teile des Anschlusspols sein. Die Rippen können auch gegenüber nur Teilabschnitten in Längsrichtung des Anschlusspols die am weitesten hervorragenden Elemente sein. So können die Rippen z. B. gegenüber der Innenoberfläche der gesamten unteren Hälfte des Anschlusspols, bezogen auf die normale Einbaulage des Anschlusspols in einem Batteriegehäuse, hervorragen.

Gemäß der Erfindung erstrecken sich die Rippen nur so weit nach oben in Richtung eines Anschlussabschnitts des Anschlusspols, der zum Anschluss einer Polklemme ausgebildet ist, dass sie den Anschlussabschnitt nicht erreichen, d.h. unterhalb des Anschlussabschnitts bereits enden. Gemäß einer vorteilhaften Weiterbildung der Erfindung erstrecken sich die Rippen in Richtung zum Anschlussabschnitt hin zu einem Verdrehsicherungsbereich des Anschlusspols, d.h. sie enden unterhalb des Verdrehsicherungsbereichs. Dies hat den Vorteil, dass sich die Rippen im Einführbereich des Polschafts in den Anschlusspol konzentrieren und nicht unnötig weit nach oben ragen.

Gemäß einer vorteilhaften Weiterbildung der Erfindung sind eine, mehrere oder alle Rippen in einem Abschnitt der Innenwand des Anschlusspols angeordnet, in dem die Innwand in Einführrichtung des Polschafts sich verjüngend ausgebildet ist. So kann z.B. der innere hohle Bereich des Anschlusspols am unteren, vom Anschlussabschnitt abgewandten Ende des Anschlusspols in etwa trichterförmig ausgebildet sein. Die Kontur der Innenwand kann z.B. linear oder bogenförmig verjüngend ausgebildet sein. Diese Anordnung der Rippen hat den Vorteil, dass ein einfaches Entformen des Anschlusspols bei dessen Fertigung möglich ist.

Gemäß einer vorteilhaften Weiterbildung der Erfindung weist der Anschlusspol im Bereich der Rippen eine größere Neigung der Innenwand gegenüber der Längsachse des Anschlusspols auf als in einem aus dem Deckelteil herausragenden Anschlussabschnitt, der zum Anschluss einer Polklemme an den Anschlusspol ausgebildet ist. Hierdurch kann in dem Bereich der Rippen der Anschlusspol innen trichterförmig ausgebildet sein. Eine solche trichterförmige Ausbildung hat den Vorteil, dass das Einführen des Polschafts in den Anschlusspol weiter vereinfacht wird und sicherer gestaltet wird.

Die Neigung der Innenwand im Bereich der Rippen kann konstant oder in Längsrichtung variabel sein. So kann die trichterförmige Ausbildung beispielsweise in Längsrichtung ein lineares Profil (Konus-Form) aufweisen oder bogenförmig sein, insbesondere einschalig hyperboloid. Vorteilhaft ist insbesondere eine bogenförmige Zunahme des Innenumfangs in dem Bereich der Rippen, die in von dem Anschlussabschnitt fortweisender Richtung progressiv ist.

Gemäß einer vorteilhaften Weiterbildung der Erfindung sind eine, mehrere oder alle Rippen als die Reibung zwischen dem Anschlusspol und dem Polschaft verringernde Rippen ausgebildet. Hierdurch kann die Fertigung von Akkumulatoren mit solchen Anschlusspolen weiter vereinfacht werden.

Gemäß einer vorteilhaften Weiterbildung der Erfindung weisen eine, mehrere oder alle der Rippen die größte Abmessung in Längsrichtung des Anschlusspols auf. Die Längsrichtung des Anschlusspols entspricht in der Regel im Wesentlichen der Einführrichtung des Polschafts in den inneren hohlen Bereich des Anschlusspols bzw. bei einem rotationssymmetrisch ausgebildeten Anschlusspol insbesondere der Symmetrieachse des Anschlusspols. Die genannte Weiterbildung hat den Vorteil, dass eine relativ lange Führungsstrecke beim Einführen des Polschafts in den Anschlusspol vorhanden ist. Dies hat den Vorteil, dass ein sicheres, reibungsarmes Einführen des Polschafts in den Anschlusspol weiter verbessert wird.

Gemäß einer vorteilhaften Weiterbildung der Erfindung sind eine, mehrere oder alle Rippen gleichmäßig über den Innenumfang des Anschlusspols verteilt angeordnet. Dies ermöglicht eine in Umfangsrichtung gleichmäßige Reibungsverringerung zwischen dem Anschlusspol und dem Polschaft, egal an welcher Stelle der Polschaft zuerst mit dem Anschlusspol in Berührung kommt.

Gemäß einer vorteilhaften Weiterbildung der Erfindung sind eine, mehrere oder alle Rippen an ihrer zum Inneren des Akkumulators weisenden Seite abgerundet ausgebildet. Hierdurch werden scharfe Ecken vermieden. Gegebenenfalls vorhandene Ecken können abgerundet werden. Dies erleichtert das einfache und schnelle Einführen des Polschafts in den Anschlusspol.

Gemäß einer vorteilhaften Weiterbildung der Erfindung sind die Rippen in einer vom Inneren des Akkumulators fort weisenden Richtung, d.h. in Richtung zu dem Anschlussabschnitt für die Polklemme hin, spitz zulaufend ausgebildet. Die Rippen können sich hierbei beispielsweise konisch oder bogenförmig zum Ende hin verjüngen. Dies hat den Vorteil, dass ein gleichmäßiger Übergang zu einem Innenabschnitt des Anschlusspols realisiert werden kann, in dem der Polschaft mit dem Anschlusspol verschweißt werden soll. Hierdurch können insbesondere scharfkantige Übergänge von dem einen zum anderen Innenabschnitt des Anschlusspols vermieden werden, was den Vorteil hat, dass der Polschaft gleichmäßig und ohne die Gefahr des Verkantens oder Verhakens vollständig in den Anschlusspol eingeführt werden kann. Gemäß einer vorteilhaften Weiterbildung der Erfindung sind die Rippen in einer zum Inneren des Akkumulators hin weisenden Reibung, d.h. in Richtung von dem Anschlussabschnitt fort, spitz zulaufend ausgebildet. Die Rippen können hierbei wie zuvor für die entgegengesetzte Richtung erläutert ausgebildet sein.

Die genannte Aufgabe kann außerdem durch einen Polschaft eines Akkumulators, der zur Einführung in oder zur Durchführung durch einen Anschlusspol des Akkumulators eingerichtet ist, wobei der Polschaft am beim Einführen in bzw. Durchführen durch den Anschlusspol vorangehenden Ende in Längsrichtung des Polschafts abgerundet ausgebildet ist, gelöst werden. Auch hierdurch kann die Fertigung solcher Akkumulatoren vereinfacht werden. Ein Verkanten oder Verhaken des Polschafts am Anschlusspol wird durch das abgerundete Ende vermieden. Hierdurch lassen sich auch leicht schräg stehende Polschäfte leicht in die Anschlusspole einführen. Durch die Abrundung wird außerdem ein Schaben des Polschafts an der Innenseite der Anschlusspol bzw. an den dort vorhandenen Rippen vermieden. Der genannte Polschaft kann insbesondere in Kombination mit dem zuvor beschriebenen Anschlusspol mit an der Innenseite vorhandenen Rippen genutzt werden, er kann aber auch mit konventionellen Anschlusspolen aus dem Stand der Technik vorteilhaft eingesetzt werden.

Die eingangs genannte Aufgabe wird außerdem gemäß Anspruch 9 gelöst durch einen Akkumulator mit wenigstens einem Gehäuseteil, wenigstens einem in das Gehäuseteil eingesetzten Elektroden-Plattensatz, wenigstens einem mit dem Elektroden-Plattensatz verbundenen Polschaft und wenigstens einem als Deckelteil ausgebildeten Gehäuseteil, in das wenigstens ein Anschlusspol integriert ist, wobei der Polschaft in oder durch einen inneren hohlen Bereich des Anschlusspols geführt ist, wobei der Anschlusspol nach einem der Ansprüche 1 bis 8 ausgebildet ist. Ein solcher Akkumulator kann ohne die eingangs genannten Probleme bei der Fertigung hergestellt werden und kann somit schneller und kostengünstiger hergestellt werden.

Gemäß einer vorteilhaften Weiterbildung der Erfindung ist der Anschlusspol in ein Kunststoffmaterial des Deckelteils eingebettet, z. B. mit dem Kunststoffmaterial umspritzt, wobei das Kunststoffmaterial auch den unteren Rand des Anschlusspols zumindest teilweise überdeckt. Dies hat den Vorteil, dass der Anschlusspol besonders sicher und haltbar in dem Deckelteil befestigt ist und durch das mit der Unterseite des Anschlusspols überlappende Kunststoffmaterial eine weiter verbesserte Dichtwirkung erzielt wird. Als Unterseite es Anschlusspols wird dabei die zum Inneren des Akkumulators gerichtete untere Stirnseite des Anschlusspols verstanden.

Die Erfindung wird nachfolgend anhand von Ausführungsbeispielen unter Verwendung von Zeichnungen näher erläutert.

Es zeigen:
- Fig. 1:: einen in ein Deckelteil eines Akkumulators eingebetteten Anschlusspol in einer Ansicht von unten und
- Fig. 2:: den Anschlusspol mit dem Deckelteil gemäß Fig. 1 im seitlichen Querschnitt und
- Fig. 3:: einen Polschaft beim Einführen in die Anordnung gemäß Fig. 2 und

Fig. 4: einen Ausschnitt eines Akkumulators.

In den Figuren werden gleiche Bezugszeichen für einander entsprechende Elemente verwendet.

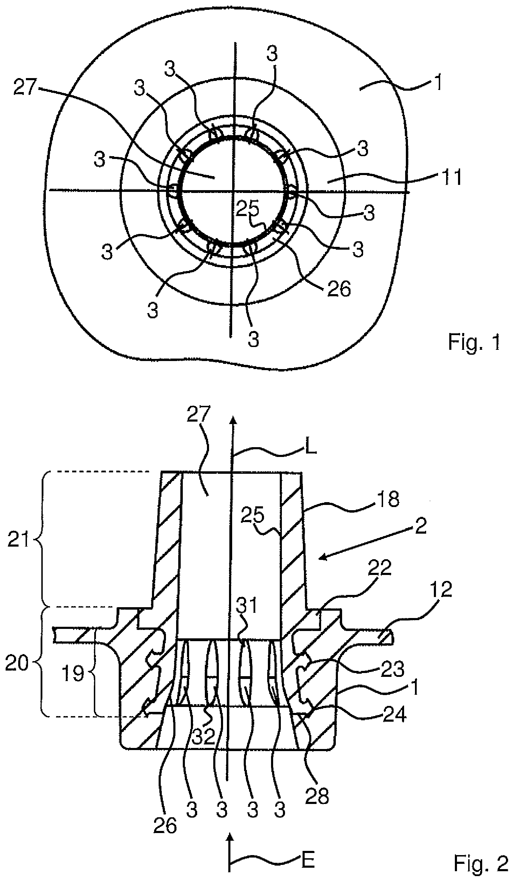

Die Fig. 1 und Fig. 2 zeigen ein Deckelteil 1 ausschnittsweise mit einem in das Kunststoffmaterial des Deckelteils 1 eingebetteten Anschlusspol 2 aus verschiedenen Ansichten. Die Fig. 2 zeigt eine seitliche Schnittansicht, bei der das Innere des mit dem Deckelteil zu bildenden Akkumulators unterhalb einer Wand 12 des Deckelteils liegt. Die Einführrichtung eines Polschafts in den Anschlusspol 2 ist mit einem Pfeil E dargestellt.

Die Fig. 1 zeigt das Deckelteil 1 mit dem Anschlusspol 2 der Fig. 1 in einer Ansicht von unten, d.h. aus der Richtung E.

Das Deckelteil 1 mit dem Anschlusspol 2 seien nachfolgend anhand der Fig. 1 und Fig. 2 beschrieben.

Der Anschlusspol 2 weist einen an der Oberseite des Deckelteils 1 aus diesem heraus stehenden Anschlussabschnitt 21 auf. Der Anschlusspol 2 ist an seiner Außenseite 18 im Anschlussabschnitt 21 zum Anschluss einer Polklemme ausgebildet. Der Anschlusspol 2 geht ausgehend von dem Anschlussabschnitt 21 über einen Befestigungsabschnitt 20, in dem zunächst eine ringförmige Umfangsvergrößerung 22 gebildet wird, die beispielsweise am Außenumfang zackenförmig ausgebildet sein kann, um eine Verdrehsicherung des Anschlusspols 2 gegenüber dem Deckelteil 1 zu realisieren. Unterhalb der ringförmigen Umfangsvergrößerung 22 wird ein Labyrinthabschnitt 19 gebildet, in dem umlaufende Vorsprünge in Form ringförmiger Erhebungen 23, 24 mit hakenförmigem Profil vorgesehen sind. Die ringförmigen Erhebungen 23, 24 können alternativ auch ein trapezförmiges- oder rundes Profil ohne Haken haben. Durch den Labyrinthabschnitt 19 wird eine sichere gas- und flüssigkeitsdichte Abdichtung zwischen dem Anschlusspol 2 und dem Deckelteil 1 hergestellt. Der Anschlusspol 2 ist in das Kunststoffmaterial des Deckelteils 1 eingebettet, z. B. mit dem Kunststoffmaterial umspritzt, wobei das Kunststoffmaterial auch den unteren Rand 28 des Anschlusspols 2 zumindest teilweise überdeckt.

Der Anschlusspol 2 ist hülsenförmig ausgebildet. Ein innerer hohler Bereich 27 des Anschlusspols 2 weist einen oberen Abschnitt 25 und einen unteren Abschnitt 26 auf. In dem Übergangsbereich von dem oberen Abschnitt 25 in den unteren Abschnitt 26 sind eine Mehrzahl von streifenförmigen Rippen 3 angeordnet, die über den Innenumfang des Anschlusspols 2 voneinander beabstandet und gleichmäßig verteilt sind. Die Rippen sind dabei direkt aus dem Material des Anschlusspols 2 gebildet, z.B. aus Bleimaterial. Wie außerdem erkennbar ist, sind die Rippen in den jeweiligen Endbereichen 31, 32 spitz zulaufend ausgebildet.

Der innere hohle Bereich 27 des Anschlusspols 2 kann zylindrisch, konisch oder bogenförmig verlaufende Innenwandabschnitte haben. Beispielweise kann der obere Abschnitt 25 nahezu zylindrisch bzw. mit einem geringen Winkel zur Längsachse L des Anschlusspols 2 konusförmig ausgebildet sein. Vorteilhaft ist der untere Abschnitt 26 mit einem größeren Winkel zur Längsachse L konusförmig oder bogenförmig ausgebildet. Insbesondere ist der untere Abschnitt 26 trichterförmig mit einer größeren Öffnung als der obere Abschnitt 25 ausgebildet.

In dem dargestellten Ausführungsbeispiel sind zehn Rippen 3 mit jeweils gleicher Breite und gleichem Abstand voneinander über den Innenumfang des unteren Abschnitts 26 des Anschlusspols 2 angeordnet. Auch eine andere Anzahl von Rippen ist vorteilhaft. Sinnvollerweise sind mindestens drei Rippen 3 vorzusehen. Je größer die Anzahl von Rippen ist, desto schmaler sind diese auszubilden.

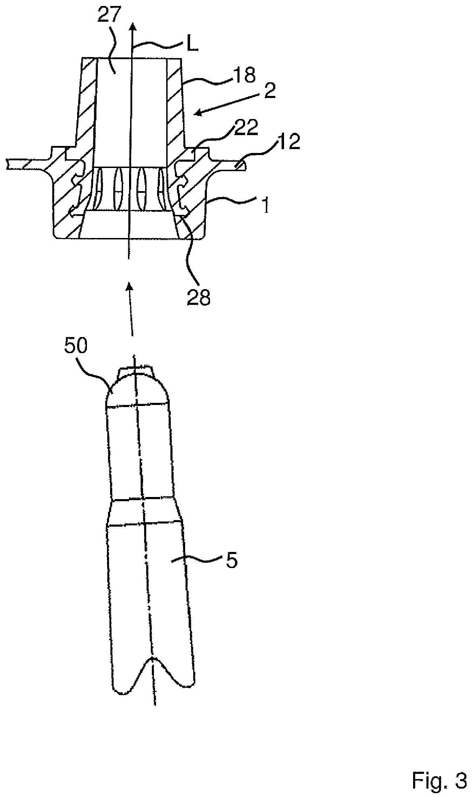

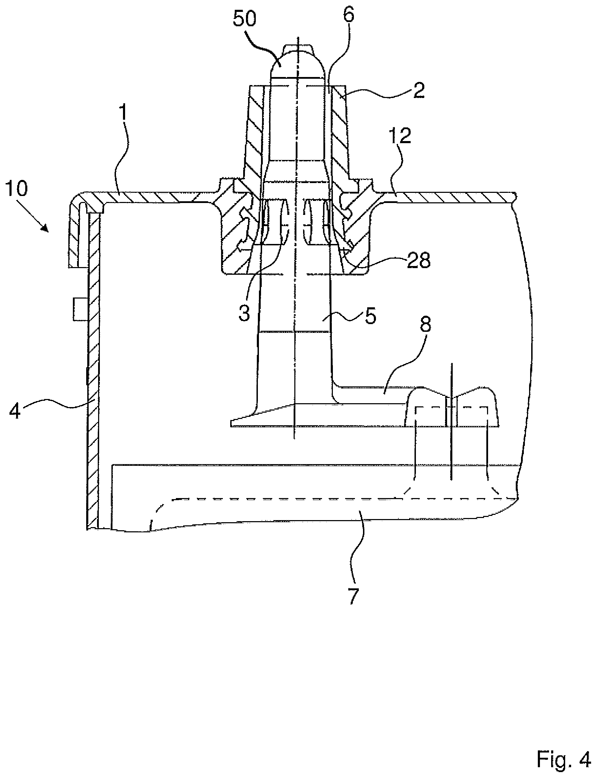

Die Fig. 3 zeigt das Einführen eines Polschafts 5 in den Anschlusspol 2, wie er anhand der Fig. 2 bereits erläutert wurde. Beispielhaft sei angenommen, dass der Polschaft 5 etwas schräg zu dem Anschlusspol 2 geführt wird. Der Polschaft 5 weist ein in Einführrichtung E vorangehendes abgerundetes Ende 50 auf. Mit diesem abgerundeten Ende 50 trifft der Polschaft 5 zuerst auf die Innenwand des Anschlusspols 2 bzw. auf die darin angeordneten Rippen 3. Hierbei wird der Polschaft 3 mit weiterem Einführen in den Anschlusspol 2 aufgerichtet und zentriert, so dass er schließlich in der gewünschten im Wesentlichen gerade ausgerichteten Position letztendlich in den Anschlusspol 2 eingeführt ist. Dies ist in der Fig. 4 dargestellt.

Die Fig. 4 zeigt ausschnittsweise einen Akkumulator 10 mit einem Gehäuseteil 4 und einem Deckelteil 1 der zuvor beschrieben Art, das auf das Gehäuseteil 4 aufgesetzt ist. Im Inneren des Gehäuseteils 4 befinden sich Elektrodenplatten, die einen Elektroden-Plattensatz 7 bilden. Der Elektroden-Plattensatz 7 ist über einen Verbinder 8 mit einem Polschaft 5 elektrisch und mechanisch verbunden. Wie erkennbar ist, ist der Polschaft 5 in den Anschlusspol 2 eingeführt und steht auf der Außenseite des Akkumulators etwas aus dem Anschlusspol 2 hervor. Der Polschaft 5 ist in diesem Bereich mit einem etwas geringeren Durchmesser ausgeführt als in den übrigen Bereichen. Hierdurch wird ein ringförmiger Raum 6 zwischen dem Polschaft 5 und dem Anschlusspol 2 gebildet. Dieser Ringraum 6 dient zur elektrischen und mechanischen Verbindung des Polschafts 5 mit dem Anschlusspol 2, z.B. durch Verschweißen.

## Patentansprüche

1. Anschlusspol (2) für einen Akkumulator (10),
wobei der Anschlusspol (2) einen inneren hohlen Bereich (27) aufweist, der zur Einführung oder Durchführung eines Polschafts (5) des Akkumulators (10) eingerichtet ist, wobei der Anschlusspol (2) im inneren hohlen Bereich (27) mehrere in Längsrichtung des Anschlusspols (2) verlaufende Rippen (3) an der Innenwand (25, 26) aufweist, wobei eine, mehrere oder alle Rippen (3) einstückig mit dem Anschlusspol (2) aus dem Material des Anschlusspols (2) ausgeführt sind und von der Innenseite des Anschlusspols hervorragen, so dass die Rippen (3) Abstandshalter zwischen dem Polschaft (5) und der inneren Oberfläche des Anschlusspols (2) bilden, **dadurch gekennzeichnet, dass**
die Rippen (3) sich so weit nach oben in Richtung eines Anschlussabschnitts (21) des Anschlusspols, der zum Anschluss einer Polklemme ausgebildet ist, erstrecken, dass sie den Anschlussabschnitt (21) nicht erreichen.

2. Anschlusspol nach Anspruch 1, **dadurch gekennzeichnet, dass** der Anschlusspol (2) einen Befestigungsabschnitt (20) aufweist, der zur Befestigung des Anschlusspols (2) in einem Gehäuseteil (1, 4) des Akkumulators (10) eingerichtet ist, und eine, mehrere oder alle Rippen (3) an der Innenwand (25, 26) des Befestigungsabschnitts (20) angeordnet sind.

3. Anschlusspol nach Anspruch 2, **dadurch gekennzeichnet, dass** der Befestigungsabschnitt (20) einen Labyrinthabschnitt (19) aufweist, in dem der Anschlusspol (2) am Außenumfang wenigstens einen umlaufenden Vorsprung (23, 24) aufweist, wobei der Labyrinthabschnitt (19) zur Labyrinthbildung mit dem Gehäusematerial des Akkumulators (10) eingerichtet ist, und eine, mehrere oder alle Rippen (3) an der Innenwand (25, 26) des Labyrinthabschnitts (19) angeordnet sind.

4. Anschlusspol nach einem der vorhergehenden Ansprüche, **dadurch gekennzeichnet, dass** eine, mehrere oder alle Rippen (3) in einem Abschnitt der Innenwand (25, 26) angeordnet sind, in dem die Innenwand (25, 26) in Einführrichtung (E) des Polschafts (5) sich verjüngend ausgebildet ist.

5. Anschlusspol nach einem der vorhergehenden Ansprüche, **dadurch gekennzeichnet, dass** eine, mehrere oder alle Rippen (3) als die Reibung zwischen dem Anschlusspol (2) und dem Polschaft (5) verringernde Gleitelemente ausgebildet sind.

6. Anschlusspol nach einem der vorhergehenden Ansprüche, **dadurch gekennzeichnet, dass** eine, mehrere oder alle der Rippen (3) die größte Abmessung in Längsrichtung (2) des Anschlusspols (2) aufweisen.

7. Anschlusspol nach einem der vorhergehenden Ansprüche, **dadurch gekennzeichnet, dass** eine, mehrere oder alle Rippen (3) gleichmäßig über den Innenumfang des Anschlusspols (2) verteilt angeordnet sind.

8. Anschlusspol nach einem der vorhergehenden Ansprüche, **dadurch gekennzeichnet, dass** eine, mehrere oder alle Rippen (3) an ihrer zum Inneren des Akkumulators (10) weisenden Seite abgerundet ausgebildet sind.

9. Akkumulator (10) mit wenigstens einem Gehäuseteil (1, 4), wenigstens einem in das Gehäuseteil (1, 4) eingesetzten Elektroden- Plattensatz (7), wenigstens einem mit dem Elektroden-Plattensatz (7) verbundenen Polschaft (5) und wenigstens einem als Deckelteil (1) ausgebildeten Gehäuseteil (1, 4), in das wenigstens ein Anschlusspol (2) integriert ist, wobei der Polschaft (5) in oder durch einen inneren hohlen Bereich (27) des Anschlusspols geführt ist, **dadurch gekennzeichnet, dass** der Anschlusspol (2) nach einem der Ansprüche 1 bis 8 ausgebildet ist,

10. Akkumulator nach Anspruch 9, **dadurch gekennzeichnet, dass** der Polschaft (5) an keiner Stelle direkt an der Innenseite des Anschlusspols (2) anliegt.

11. Akkumulator nach Anspruch 9 oder 10, **dadurch gekennzeichnet, dass** der Anschlusspol (2) in ein Kunststoffmaterial des Deckelteils (1) eingebettet ist, wobei das Kunststoffmaterial auch den unteren Rand (28) des Anschlusspols (2) zumindest teilweise überdeckt.

## Claims

1. Connection pole (2) for a rechargeable battery (10),
wherein the connection pole (2) has an inner hollow region (27) which is designed for the insertion or passage of a pole shaft (5) of the rechargeable battery (10), wherein the connection pole (2) has, in the inner hollow region (27), a plurality of ribs (3), which run in the longitudinal direction of the connection pole (2), on the inner wall (25, 26), wherein one, several or all of the ribs (3) are integrally formed with the connection pole (2) from the material of the connection pole (2) and protrude from the inner side of the connection pole, so that the ribs (3) form spacers between the pole shaft (5) and the inner surface of the connection pole (2),
**characterized in that**
the ribs (3) extend upward in the direction of a connection section (21) of the connection pole, which connection section is formed for connection of a pole terminal, to such an extent that they do not reach the connection section (21).

2. Connection pole according to claim 1,
**characterized in that** the connection pole (2) has a fastening section (20) which is designed for fastening the connection pole (2) in a housing part (1, 4) of the rechargeable battery (10), and one, several or all of the ribs (3) are arranged on the inner wall (25, 26) of the fastening section (20).

3. Connection pole according to claim 2,
**characterized in that** the fastening section (20) has a labyrinth section (19) in which the connection pole (2) has, on the outer circumference, at least one circumferential protrusion (23, 24), wherein the labyrinth section (19) is designed to form a labyrinth with the housing material of the rechargeable battery (10), and one, several or all of the ribs (3) are arranged on the inner wall (25, 26) of the labyrinth section (19).

4. Connection pole according to one of the preceding claims,
**characterized in that** one, several or all of the ribs (3) are arranged in a section of the inner wall (25, 26) in which section the inner wall (25, 26) is designed so as to taper in the insertion direction (E) of the pole shaft (5).

5. Connection pole according to one of the preceding claims,
**characterized in that** one, several or all of the ribs (3) are designed as sliding elements which reduce the friction between the connection pole (2) and the pole shaft (5).

6. Connection pole according to one of the preceding claims,
**characterized in that** one, several or all of the ribs (3) have the largest dimension in the longitudinal direction (2) of the connection pole (2).

7. Connection pole according to one of the preceding claims,
**characterized in that** one, several or all of the ribs (3) are arranged in a manner distributed uniformly over the inner circumference of the connection pole (2).

8. Connection pole according to one of the preceding claims,
**characterized in that** one, several or all of the ribs (3) are of rounded design on their side which faces the interior of the rechargeable battery (10).

9. Rechargeable battery (10) comprising at least one housing part (1, 4), at least one electrode plate set (7) which is inserted into the housing part (1, 4), at least one pole shaft (5) which is connected to the electrode plate set (7), and at least one housing part (1, 4) which is in the form of a cover part (1) and into which at least one connection pole (2) is integrated, wherein the pole shaft (5) is guided into or through an inner hollow region (27) of the connection pole, **characterized in that** the connection pole (2) is designed according to one of claims 1 to 8.

10. Rechargeable battery according to claim 9,
**characterized in that** the pole shaft (5) does not bear directly against the inner side of the connection pole (2) at any point.

11. Rechargeable battery according to claim 9 or 10,
**characterized in that** the connection pole (2) is embedded into a plastic material of the cover part (1), wherein the plastic material also at least partially covers the lower edge (28) of the connection pole (2).

## Revendications

1. Borne de connexion (2) destinée à un accumulateur (10),
dans laquelle la borne de connexion (2) comporte une zone intérieure creuse (27) adaptée pour l'introduction ou la traversée d'une tige de borne (5) de l'accumulateur (10), dans laquelle la borne de connexion (2) présente une pluralité de nervures (3) s'étendant dans la direction longitudinale de la borne de connexion (2) sur la paroi intérieure (25, 26) dans la zone intérieure creuse (27), dans laquelle l'une, une pluralité ou la totalité des nervures (3) sont réalisées d'un seul tenant avec la borne de connexion (2) à partir du matériau de la borne de connexion (2) et dépassent de la face intérieure de la borne de connexion de manière à ce que les nervures (3) forment des entretoises entre la tige de borne (5) et la surface intérieure de la borne de connexion (2),
**caractérisée en ce que**
les nervures (3) s'étendent vers le haut en direction d'une partie de connexion (21) de la borne de connexion, réalisée pour la connexion d'une borne de connexion de manière à ne pas atteindre la partie de connexion (21).

2. Borne de connexion selon la revendication 1,
**caractérisée en ce que** la borne de connexion (2) comprend une partie de fixation (20) adaptée pour la fixation de la borne de connexion (2) dans une partie de boîtier (1, 4) de l'accumulateur (10) et **en ce que** l'une, une pluralité ou la totalité des nervures (3) sont disposées sur la paroi intérieure (25, 26) de la partie de fixation (20).

3. Borne de connexion selon la revendication 2,
**caractérisée en ce que** la partie de fixation (20) comporte une section en labyrinthe (19) dans laquelle la borne de connexion (2) comporte au moins une protubérance circonférentielle (23, 24) sur la circonférence extérieure, dans laquelle la partie en labyrinthe (19) est adaptée pour la formation d'un labyrinthe avec le matériau du boîtier de l'accumulateur (10), et **en ce que** l'une, une pluralité ou la totalité des nervures (3) sont disposées sur la paroi intérieure (25, 26) de la partie en labyrinthe (19).

4. Borne de connexion selon l'une des revendications précédentes,
**caractérisée en ce que** l'une, une pluralité ou la totalité des nervures (3) sont disposées dans une partie de la paroi intérieure (25, 26) dans laquelle la paroi intérieure (25, 26) est effilée dans la direction d'insertion (E) de la tige de borne (5).

5. Borne de connexion selon l'une des revendications précédentes,
**caractérisée en ce que** l'une, une pluralité ou la totalité des nervures (3) sont réalisées sous la forme d'éléments coulissants réduisant le frottement entre la borne de connexion (2) et la tige de borne (5).

6. Borne de connexion selon l'une des revendications précédentes,
**caractérisée en ce que** l'une, une pluralité ou la totalité des nervures (3) ont leur plus grande dimension dans la direction longitudinale (2) de la borne de connexion (2).

7. Borne de connexion selon l'une des revendications précédentes,
**caractérisée en ce que** l'une, une pluralité ou la totalité des nervures (3) sont réparties uniformément sur la circonférence intérieure de la borne de connexion (2).

8. Borne de connexion selon l'une des revendications précédentes,
**caractérisée en ce que** l'une, une pluralité ou la totalité des nervures (3) sont arrondies sur leur côté tourné vers l'intérieur de l'accumulateur (10).

9. Accumulateur (10) comportant au moins une partie de boîtier (1, 4), au moins un jeu de plaques d'électrodes (7) inséré dans la partie de boîtier (1, 4), au moins une tige de borne (5) reliée au jeu de plaques d'électrodes (7) et au moins une partie de boîtier (1, 4) réalisée sous la forme d'une partie formant couvercle (1) dans laquelle au moins une borne de connexion (2) est intégrée, dans lequel la tige la borne (5) est guidée dans ou à travers une partie intérieure creuse (27) de la borne de connexion,
**caractérisé en ce que** la borne de connexion (2) est réalisée selon l'une des revendications 1 à 8.

10. Accumulateur selon la revendication 9,
**caractérisé en ce que** la tige de borne (5) ne repose en aucun point directement sur la face intérieure de la borne de connexion (2).

11. Accumulateur selon la revendication 9 ou 10,
**caractérisé en ce que** la borne de connexion (2) est noyée dans une matière plastique de la partie formant couvercle (1), dans lequel la matière plastique recouvre également au moins partiellement le bord inférieur (28) de la borne de connexion (2).
